# EUROPÄISCHE PATENTSCHRIFT

(11) **EP 2 572 490 B1**
(45) Veröffentlichungstag und Bekanntmachung des Hinweises auf die Patenterteilung: **23.05.2018**
(21) Anmeldenummer: 11728815.9
(22) Anmeldetag: 22.06.2011
(51) Int. Cl.: H04L 29/06, H04W 12/06

(54) **VERFAHREN ZUM REGISTRIEREN EINER DRAHTLOSEN KOMMUNIKATIONSEINRICHTUNG AN EINER BASISEINRICHTUNG SOWIE ENTSPRECHENDES SYSTEM**
METHOD FOR REGISTERING A WIRELESS COMMUNICATION DEVICE AT A BASE DEVICE AND CORRESPONDING SYSTEM
PROCÉDÉ POUR ENREGISTRER UN DISPOSITIF DE COMMUNICATION SANS FIL SUR UN DISPOSITIF DE BASE AINSI QUE SYSTÈME CORRESPONDANT

(30) Priorität: 22.07.2010 DE 102010031931
(43) Veröffentlichungstag der Anmeldung: 27.03.2013
(73) Patentinhaber: Siemens Aktiengesellschaft, 80333 München (DE)
(72) Erfinder: FALK, Rainer, 85586 Poing (DE)
(86) Internationale Anmeldenummer: PCT/EP2011/060489
(87) Internationale Veröffentlichungsnummer: WO 2012/010381

(56) Entgegenhaltungen:
- US-A1- 2005 117 752
- US-A1- 2006 282 885

## Beschreibung

Die Erfindung betrifft ein Verfahren zum Registrieren einer drahtlosen Kommunikationseinrichtung sowie ein entsprechendes System.

Steuergeräte, Sensoren, Aktoren werden heutzutage zunehmend drahtlos miteinander verbunden bzw. vernetzt, um größtmögliche Flexibilität zu gewährleisten. Dabei ist auch eine Wartung der Geräte bzw. Sensoren einfacher, da beispielsweise im Falle einer Störung keine Kabelschächte, etc. geöffnet werden müssen, sondern lediglich das Gerät direkt. Zur Verbindung der genannten Steuergeräte, Sensoren, etc. werden üblicherweise offene Protokolle wie IEEE 802.11 WLAN, IEEE 802.15.4, Bluetooth, ZigBee oder auch Wireless HART verwendet. Um möglichst eine Manipulation der Sensoren oder Anweisungen der Steuergeräte bei der drahtlosen Verbindung zu vermeiden, wird die Kommunikation vom Steuergerät oder Sensor von der entsprechen Punktschnittstelle kryptographisch verschlüsselt, beispielsweise durch eine WLAN-Verbindung mittels TKIP oder CCMP, oder bei 802.15.4 mittels AES-CCM. Um ein Steuergerät, einen Sensor oder Ähnliches mit einer Funkstation zu verbinden und eine verschlüsselte Verbindung zu etablieren, muss das Steuergerät, der Sensor oder allgemein die drahtlose Kommunikationseinrichtung so konfiguriert werden, dass die entsprechende Verschlüsselung verwendet wird, also beispielsweise ein kryptographischer Schlüssel eingerichtet werden. Eine derartige Einrichtung eines Schlüssels wird auch als Bootstrapping oder Pairing bezeichnet.

Aus der US 2006/282885 ist bekannt, dass ein Administratorgerät eines zu konfigurierenden Drahtlosgeräts einen Berechtigungsnachweis drahtlos bereitstellt. Das Drahtlosgerät wird von dem Administratorgerät mit dem vom Administratorgerät bereitgestellten Berechtigungsnachweis konfiguriert.

Darüber hinaus ist es bekannt, eine In-Band-Kommunikation während einer schwach geschützten Phase vorzunehmen. Das entsprechende drahtlose einzurichtende Kommunikationsgerät benötigt hierfür jedoch spezielle modifizierte Übertragungsverfahren. Schließlich ist es bekannt, ein Pairing gesichert durch einen Out-Of-Band-Kanal, wie beispielsweise menschliche Interaktion (also Eingabe bzw. Prüfen einer PIN, etc.) vorzunehmen.

Nachteilig dabei ist, dass die vorgenannten Verfahren einen hohen Arbeitsaufwand erfordern und kompliziert gestaltet sind, insbesondere bei Einsatz im industriellen Bereich, da dort eine große Anzahl von drahtlosen Kommunikationseinrichtungen eingerichtet werden. Dabei ist es gleichzeitig erforderlich, dass das Pairing geschützt bzw. gesichert erfolgt, da dabei die Sicherheitskonfigurationsparameter eingerichtet werden.

Eine Aufgabe der vorliegenden Erfindung ist daher, ein Verfahren und ein System zum Registrieren einer drahtlosen Kommunikationseinrichtung an einer Basiseinrichtung zur Verfügung zu stellen, bei dem der Vorgang des Pairings für eine Vielzahl von zu registrierenden drahtlosen Geräten einfacher und mit geringem Arbeitsaufwand durchführbar ist und gleichzeitig der Pairing-Vorgang geschützt abläuft.

Diese Aufgabe wird durch ein Verfahren gemäß dem Anspruch 1 und einem System gemäß dem Anspruch 7 gelöst. Der erzielte Vorteil dabei ist, dass zum Registrieren der drahtlosen Kommunikationseinrichtung an der Basiseinrichtung keine zusätzliche Interaktion notwendig ist, es muss nur eine entsprechende Authentisierungseinrichtung, beispielsweise von einem Monteur etc., mitgeführt werden, um die drahtlose Kommunikationseinrichtung für ein Pairing mit der Basiseinrichtung vorzubereiten.

Vorteilhafterweise erfolgt das Aussenden einer Authentisierungsinformation mittels einer reduzierten Sendeleistung und/oder gerichtet, so dass die Authentisierungsinformation nur räumlich begrenzt empfangbar ist. Der Vorteil hierbei ist, dass damit die Sicherheit der Registrierung der drahtlosen Kommunikationseinrichtung weiter verbessert wird, da die Authentisierungsinformation nur in einem bestimmten Bereich empfangbar ist, der aufgrund der begrenzten Reichweite und/oder der gerichteten Ausstrahlung räumlich begrenzt ist. Einem potentiellen Angreifer wird so das Abhören bzw. Belauschen von übertragenen Authentisierungsinformationen erschwert.

Zweckmäßigerweise erfolgt vor dem Aussenden der Authentisierungsinformation ein Überwachen und/oder Auswerten von Signalen, insbesondere Kommunikationssignalen, der drahtlosen Kommunikationseinrichtung und/oder von weiteren sich in einer Funkreichweite der Authentisierungseinrichtung befindenden drahtlosen Kommunikationseinrichtungen. Der erzielte Vorteil dabei ist, dass damit zum einen die Sicherheit der Registrierung der drahtlosen Kommunikationseinrichtung insgesamt verbessert wird und gleichzeitig die Zuverlässigkeit gesteigert werden kann. Wird beispielsweise ein Überwachen von Funksignalen im Frequenzbereich der drahtlosen Kommunikationsvorrichtung vorgenommen und ergibt die Überprüfung, dass hier unübliche Funksignale und/oder Kommunikationssignale von der drahtlosen Kommunikationseinrichtung gesendet und/oder empfangen werden, wird einem Benutzer der drahtlosen Authentisierungseinrichtung eine entsprechende Information angezeigt werden, so dass das Aussenden der Authentisierungsinformation erst dann erfolgt, wenn der Grund für die unüblichen Funk- und/oder Kommunikationssignale gefunden ist, um eine Manipulation der drahtlosen Kommunikationseinrichtung oder ein Abhören der Kommunikation der drahtlosen Kommunikationseinrichtung mit der drahtlosen Authentisierungseinrichtung ausschließen zu können.

Vorteilhafterweise werden die überwachten und/oder ausgewerteten Signale der drahtlosen Kommunikationseinrichtung in die Authentisierungsinformation kodiert, wobei insbesondere die kodierten überwachten und/oder ausgewerteten Signale durch die Basiseinrichtung ausgewertet werden. Der Vorteil dabei ist, dass damit die Sicherheit weiter gesteigert wird, da die drahtlose Kommunikationseinrichtung über eine Information über bestimmte Funk- und/oder Signaleigenschaften verfügt, so dass Manipulationen an der drahtlosen Kommunikationseinrichtung festgestellt werden können. Wird die Information der überwachten und/oder ausgewerteten Signale in die durch die Basiseinrichtung ausgewertete Authentisierungsinformation eincodiert, wird vermieden, dass eine manipulierte drahtlose Kommunikationseinrichtung selbst ein gewolltes falsches Prüfergebnis an die Basiseinrichtung sendet und so trotz Manipulation eine Registrierung der drahtlosen Kommunikationseinrichtung an der Basiseinrichtung erfolgt. Dadurch wird die Sicherheit weiter gesteigert.

Zweckmäßigerweise erfolgt vor dem Aussenden der Authentisierungsinformation ein Überprüfen von zumindest einem Parameter einer Funkumgebung. Durch die Überwachung zumindest eines Parameters der Funkumgebung können beispielsweise weitere drahtlose Geräte oder Störsignale in der Umgebung einfach erkannt werden, so dass beim Vorliegen von Störsignalen oder anderen Geräten in der Umgebung gegebenenfalls ein Aussenden der Authentisierungsinformation unterbunden werden kann, um Manipulationen oder eine fehlerhafte Übertragung der Authentisierungsinformation von der drahtlosen Authentisierungseinrichtung zur drahtlosen Kommunikationseinrichtung zu vermeiden.

Um sicherzustellen, dass die drahtlose Authentisierungseinrichtung nicht zu manipulativen Zwecken, beispielsweise aus einem Gebäude oder einer vordefinierten Umgebung entfernt wird, ist es vorteilhaft, dass vor dem Aussenden der Authentisierungsinformation ein Lokalisieren der drahtlosen Authentisierungseinrichtung erfolgt.

Weitere Merkmale und Vorteile der Erfindung ergeben sich aus der nachfolgenden Beschreibung eines Ausführungsbeispiels anhand der Figuren.

Dabei zeigt
- Fig. 1: ein Verfahren bzw. ein System zum Registrieren einer drahtlosen Kommunikationseinrichtung in einer ersten Ausführungsform der vorliegenden Erfindung;
- Fig. 2a: ein Übertragungsverfahren gemäß der ersten Ausführungsform der vorliegenden Erfindung;
- Fig. 2b: ein Übertragungsverfahren für ein Verfahren gemäß einer zweiten Ausführungsform der vorliegenden Erfindung; sowie
- Fig. 3: ein Übertragungsdiagramm für ein Verfahren gemäß einer dritten Ausführungsform der vorliegenden Erfindung.

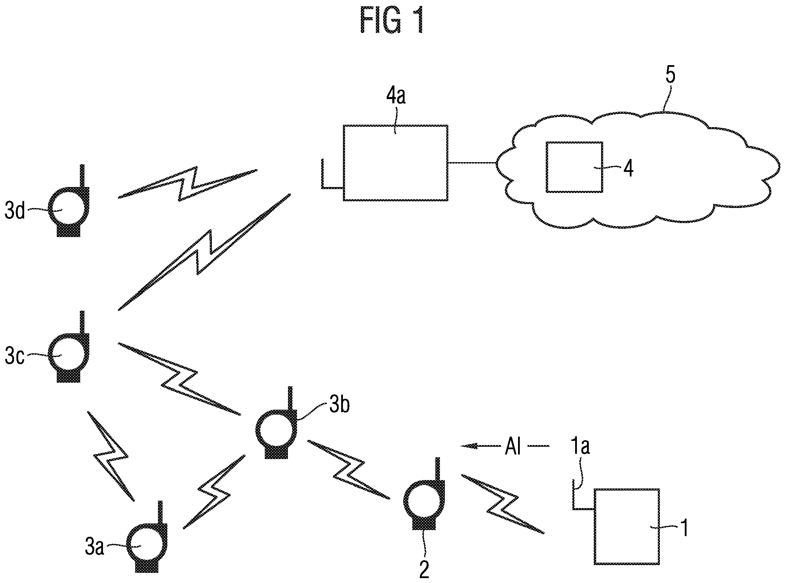

Fig. 1 zeigt ein Verfahren bzw. ein System zum Registrieren einer drahtlosen Kommunikationseinrichtung in einer ersten Ausführungsform der vorliegenden Erfindung.

In Fig. 1 bezeichnet ein Bezugszeichen 1 eine drahtlose Authentisierungseinrichtung 1, die über eine Funkschnittstelle 1a verfügt. Die drahtlose Authentisierungseinrichtung 1 überträgt eine Authentisierungsinformation AI über die Funkschnittstelle 1a zu einer drahtlosen Kommunikationseinrichtung 2, die an einer Basiseinrichtung 4 registriert werden soll. Bereits an der Basiseinrichtung 4 registriert sind weitere drahtlose Kommunikationseinrichtungen in Form von Sensorknoten 3a, 3b, 3c, 3d, die untereinander drahtlos verbunden sind zur Übertragung von Sensordaten und ggf. auch direkt mit der Funkschnittstelle 4a der Basiseinrichtung 4. Die Basiseinrichtung 4 ist wiederum mit einem Netzwerk 5 verbunden und erlaubt den Sensorknoten 3a, 3b, 3c, 3d den Zugriff auf das Netzwerk 5 nach erfolgreicher Anmeldung bzw. Authentisierung (Network Join) an der Basiseinrichtung 4. Nur ein an der Basiseinrichtung 4 registrierter Sensorknoten 3a, 3b, 3c, 3d kann sich an der Basiseinrichtung 4 erfolgreich anmelden. Die Basiseinrichtung 4 greift dazu auf gespeicherte Information über registrierte Sensorknoten 3a, 3b, 3c, 3d zu. Nach dem Übertragen der Authentisierungsinformation AI von der drahtlosen Authentisierungseinrichtung 1 zu der drahtlosen Kommunikationseinrichtung 2 sendet diese die erhaltenen Authentisierungsinformationen AI gemäß Fig. 1 über den Sensorknoten 3b und 3c sowie über die Funkschnittstelle 4a an die Basiseinrichtung 4, die die Authentisierungsinformation AI überprüft. Dazu kann z.B. eine in der Authentisierungsinformation AI enthaltene kryptographische Prüfsumme (Message Authentication Code, Digitale Signatur) geprüft werden. Die kryptographische Prüfsumme kann durch die drahtlose Authentisierungseinrichtung 1 unter Verwendung eines gespeicherten kryptographischen Schlüssels berechnet werden. Ist die Authentisierungsinformation AI gültig, wird durch die Basiseinrichtung 4 ein Zugriffsschlüssel JK (Join Key) erzeugt und über die jeweiligen Sensorknoten 3a, 3b, 3c, 3d schließlich zur drahtlosen Kommunikationseinrichtung 2 zurückgesendet. Die drahtlose Kommunikationseinrichtung 2 ist nun bei der Basiseinrichtung 4 registriert und hat nun Zugriff auf das Netzwerk 5 der Basiseinrichtung 4.

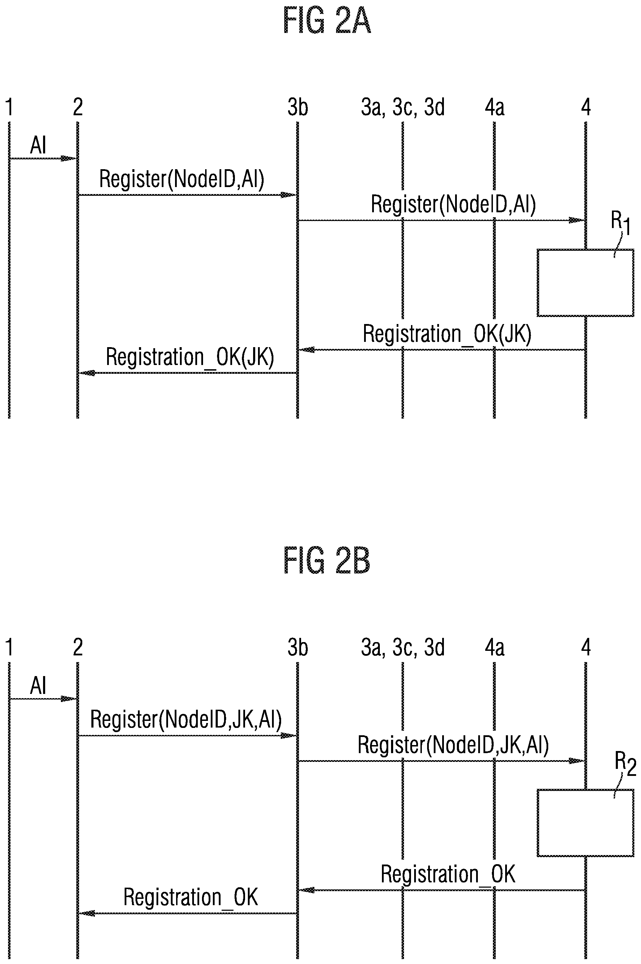

Fig. 2 zeigt ein Übertragungsverfahren gemäß der ersten Ausführungsform der vorliegenden Erfindung.

In Fig. 2a ist im Detail die Übertragung der Information zu den einzelnen Geräten in zeitlicher Abfolge gezeigt. Die drahtlose Authentisierungseinrichtung 1 sendet eine Authentisierungsinformation AI an die zu registrierende drahtlose Kommunikationseinrichtung 2. Die drahtlose Kommunikationseinrichtung 2 sendet nun die empfangene Authentisierungsinformation AI zusammen mit einer entsprechenden Identifikationsnummer der zu registrierenden drahtlosen Kommunikationseinrichtung 2 an einen benachbarten Sensorknoten 3b, der wiederum gegebenenfalls über weitere benachbarte Sensorknoten 3a, 3c, 3d und die Funkschnittstelle 4a der Basiseinrichtung 4 diese Authentisierungsinformation AI und die entsprechende Identifikationsnummer der zu registrierenden drahtlosen Kommunikationseinrichtung 2 an die Basiseinrichtung 4 sendet. Die Basiseinrichtung 4 überprüft bei der Registrierung R₁ nun die erhaltene Authentisierungsinformation AI und erzeugt einen Zugriffsschlüssel JK bei erfolgreicher Überprüfung und trägt die Identifikationsnummer der zu registrierenden drahtlosen Kommunikationseinrichtung 2 in eine interne Tabelle der Basiseinrichtung 4 ein, in der die zugriffsberechtigten Sensorknoten 3a, 3b, 3c, 3d ebenfalls eingetragen sind. Der erzeugte Zugriffsschlüssel JK wird dann über die Funkschnittstelle 4a, die Sensorknoten 3a, 3c, 3d gegebenenfalls und den benachbarten Sensorknoten 3b der drahtlosen Kommunikationseinrichtung 2 an diese übertragen. Damit ist der Registrierungsvorgang abgeschlossen. In einer Variante trägt die Basiseinrichtung 4 bei der Registrierung R₁ zusätzlich den Zugriffsschlüssel JK in die interne Tabelle der Basiseinrichtung 4 ein. In einer weiteren, nicht dargestellten Variante wird durch die Basiseinrichtung 4 statt der internen Tabelle der Basiseinrichtung 4 eine externe Tabelle der Basiseinrichtung 4 verwendet, z.B. eine Datenbank oder ein Verzeichnisdienst.

In Fig. 2b wird von der drahtlosen Kommunikationseinrichtung 2 im Unterschied zur Fig. 2a zusätzlich von der drahtlosen Kommunikationseinrichtung 2 ein Zugriffsschlüssel JK, der entweder vorkonfiguriert ist bzw. selbst erzeugt wird, über den benachbarten Sensorknoten 3b gegebenenfalls über weitere Sensorknoten 3a, 3c, 3d und über die Funkschnittstelle 4a der Basiseinrichtung 4 zusammen mit der Authentisierungsinformation AI und einer Identifikationsnummer an die Basiseinrichtung 4 übertragen. Die Registrierung R₂ an der Basiseinrichtung 4 erfolgt nun folgendermaßen: Die Basiseinrichtung 4 prüft die erhaltene Authentisierungsinformation AI und trägt im Falle einer positiven Überprüfung die Identifikationsnummer und den Zugriffsschlüssel JK in eine Tabelle für zugriffsberechtigte Sensorknoten ein. Schließlich übermittelt die Basisstation 4 über die Funkschnittstelle 4a und Sensorknoten 3a, 3b, 3c, 3d ein entsprechendes Signal, dass die Registrierung erfolgreich war, an die drahtlose Kommunikationseinrichtung 2.

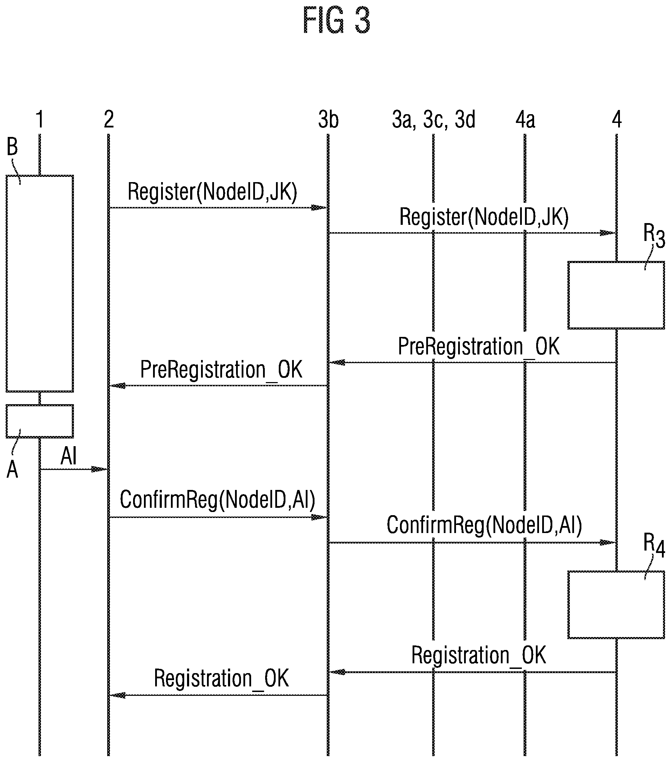

Fig. 3 zeigt ein Übertragungsdiagramm für ein Verfahren gemäß einer zweiten Ausführungsform der vorliegenden Erfindung. In Fig. 3 führt die drahtlose Authentisierungseinrichtung 1 ein Beobachten B eines Voranmeldeverfahrens einer drahtlosen Kommunikationseinrichtung 2 durch. Diese übermittelt ihre Identifikationsnummer und einen Zugriffsschlüssel JK über den benachbarten Sensorknoten 3b und gegebenenfalls weitere Sensorknoten 3a, 3c, 3d, über die Funkschnittstelle 4a zu der Basiseinrichtung 4. Es erfolgt ein Speichern R₃ der Identifikationsnummer und des Zugriffsschlüssels JK durch die Basiseinrichtung 4. Die Basiseinrichtung 4 übermittelt weiter ein Voranmeldesignal, enthaltend die Information, dass die Vorregistrierung erfolgreich war, an die drahtlose Kommunikationseinrichtung 2 zurück. Dieses Voranmeldeverfahren wird das Beobachten B durch die drahtlose Authentisierungseinrichtung 1 beobachtet (Beobachten B) und analysiert. In Abhängigkeit des Ergebnisses der Analyse wird dann entscheiden, ob eine Authentisierungsinformation AI an die drahtlose Kommunikationseinrichtung 2 übermittelt wird. Im Falle eines positiven Ergebnisses des Analysierens A wird eine Authentisierungsinformation AI an die drahtlose Kommunikationseinrichtung 2 übermittelt. Diese wiederum übermittelt die erhaltene Authentisierungsinformation und die Identifikationsnummer der drahtlosen Kommunikationseinrichtung 2 über die Sensorknoten 3b, 3a, 3c, 3d und die Funkschnittstelle 4a an die Basiseinrichtung 4. An der Basiseinrichtung 4 erfolgt ein Registrieren R₄, in dem die Authentisierungsinformation AI prüft und im Falle eines positiven Prüfergebnisses wird die Identifikationsnummer der drahtlosen Kommunikationseinrichtung 2 und des Zugriffsschlüssels JK in eine entsprechende Zugriffstabelle gemäß der Beschreibung zu den vorstehenden Figuren eingetragen. Weiterhin übermittelt die Basiseinrichtung 4 eine entsprechende Information zurück zu der drahtlosen Kommunikationseinrichtung 2, dass ein Registrieren der drahtlosen Kommunikationseinrichtung 2 an der Basiseinrichtung 4 erfolgreich war.

Obwohl die vorliegende Erfindung durch vorstehende bevorzugte Ausführungsbeispiele beschrieben wurde, ist sie nicht darauf beschränkt, sondern auf vielfältige Weise modifizierbar.

Beispielsweise ist es möglich, die Authentisierungsinformation als Broadcast zu übertragen. Auf diese Weise können alle drahtlosen Kommunikationseinrichtungen, die sich in der Nähe befinden, diese Authentisierungsinformation empfangen. Des Weiteren ist es möglich, die Authentisierungsinformation an eine bestimmte drahtlose Kommunikationseinrichtung als Unicast zu übertragen, z.B. nach einer Authentisierung mit einem Gerätezertifikat eines Sensorknotens oder allgemeiner einer drahtlosen Kommunikationseinrichtung. Dabei können weitere Knoten-bezogene Messungen der Übertragungseigenschaften erfolgen, z.B. dessen Signalstärke kann mit einem vorgegebenen Wert verglichen werden oder es kann mittels Entfernungsmessung eine Entfernung zwischen der drahtlosen Authentisierungseinrichtung und der drahtlosen Kommunikationseinrichtung überprüft werden. Die Authentisierungsinformation AI kann beispielsweise ein Passwort, eine zeitlich wechselnde Zufallsfolge bei einem Zeitstempel mit einer kryptographischen Prüfsumme (Message Authentication Code MAC bzw. digitale Signatur) umfassen. Darüber hinaus kann die von der drahtlosen Authentisierungseinrichtung bereitgestellte Autorisierungsinformation aus mehreren Teilinformationen bestehen. Es ist beispielsweise möglich, dass nur eine Teilinformation von der drahtlosen Kommunikationseinrichtung an die Basiseinrichtung übertragen wird. Es ist beispielsweise möglich, dass die drahtlose Autorisierungseinrichtung zum Beispiel ein Tupel bereitstellt, umfassend eine Bestätigungsinformation bzw. Assertion (z.B. eine SAML-Assertion) und einen Schlüssel. Die drahtlose Kommunikationseinrichtung überträgt dann die Assertion an die Basiseinrichtung und verifiziert die Kenntnis des Schlüssels, ohne ihn jedoch an die Basiseinrichtung zu übertragen. Dies kann beispielsweise derart erfolgen, dass die Basiseinrichtung eine Zufallszahl in die drahtlose Kommunikationseinrichtung überträgt. Die drahtlose Kommunikationseinrichtung führt dann eine Berechnung aus, in die die Zufallszahl und der Schlüssel als Parameter eingehen, beispielweise eine HMAC-SHA1(Schlüssel, Zufallszahl) und übermittelt das Ergebnis zurück an die Basiseinrichtung, die dann wiederum überprüft, ob anhand des Ergebnisses die drahtlose Kommunikationseinrichtung Zugriff auf das Netzwerk der Basiseinrichtung erhalten soll.

Eine drahtlose Kommunikation des drahtlosen Kommunikationsgeräts kann beispielsweise mittels WLAN oder Bluetooth erfolgen.

## Patentansprüche

1. Verfahren zum Registrieren einer drahtlosen Kommunikationseinrichtung (2) an einer Basiseinrichtung (4), mit den Schritten:
(a) Aussenden einer Authentisierungsinformation (AI) durch eine drahtlose Authentisierungseinrichtung (1),
(b) Empfangen der gesendeten Authentisierungsinformation (AI) durch die drahtlose Kommunikationseinrichtung (2), insbesondere mittels In-Band-Kommunikation,
(c) Übertragen der empfangenen Authentisierungsinformation (AI) zusammen mit einer Identifikationsnummer der drahtlosen Kommunikationseinrichtung (2) durch die drahtlose Kommunikationseinrichtung (2) zu der Basiseinrichtung (4),
(d) Überprüfen der übertragenen Authentisierungsinformation (AI) durch die Basiseinrichtung (4), und
(e) Einbinden der drahtlosen Kommunikationseinrichtung (2) in ein Netzwerk (5) in Abhängigkeit des Ergebnisses der Überprüfung,
wobei die Authentisierungsinformation (AI) als Broadcast oder als Unicast übertragen werden, und dabei weitere Knoten-bezogene Messungen von Übertragungseigenschaften erfolgen, um eine Signalstärke mit einem vorgegebenen Wert zu vergleichen und/oder eine Entfernungsmessung zwischen der drahtlosen Authentisierungseinrichtung (1) und der drahtlosen Kommunikationseinrichtung (2) zu überprüfen.

2. Verfahren gemäß Anspruch 1, wobei
das Aussenden einer Authentisierungsinformation (AI) mittels einer reduzierten Sendeleistung und/oder gerichtet erfolgt, so dass die Authentisierungsinformation (AI) nur räumlich begrenzt empfangbar ist.

3. Verfahren gemäß einem der Ansprüche 1 und 2, wobei
vor dem Aussenden der Authentisierungsinformation (AI) ein Überwachen und/oder Auswerten von Signalen, insbesondere Kommunikationssignalen, der drahtlosen Kommunikationseinrichtung (2) und/oder von weiteren sich in einer Funkreichweite der Authentisierungseinrichtung (1) befindenden drahtlosen Kommunikationseinrichtungen (3a, 3b, 3c, 3d) erfolgt.

4. Verfahren gemäß Anspruch 3, wobei
die überwachten und/oder ausgewerteten Signale der drahtlosen Kommunikationseinrichtung (2) in die Authentisierungsinformation (AI) codiert wird, insbesondere wobei die codierte überwachte Kommunikation durch die Basiseinrichtung (4) ausgewertet wird.

5. Verfahren gemäß einem der Ansprüche 1 bis 4, wobei
vor dem Aussenden der Authentisierungsinformation (AI) ein Überprüfen von zumindest einem Parameter einer Funkumgebung erfolgt.

6. Verfahren gemäß einem der Ansprüche 1 bis 5, wobei
vor dem Aussenden der Authentisierungsinformation (AI) ein Lokalisieren der drahtlosen Authentisierungseinrichtung (1) erfolgt.

7. System zum Registrieren einer drahtlosen Kommunikationseinrichtung (2), insbesondere geeignet zur Durchführung eines Verfahrens gemäß einem der Ansprüche 1 bis 6, mit:
(a) einer drahtlosen Authentisierungseinrichtung (1), die dazu ausgelegt ist, eine Authentisierungsinformation (AI) an die drahtlose Kommunikationseinrichtung (2) auszusenden,
(b) einer drahtlosen Kommunikationseinrichtung (2) zum Empfangen der ausgesendeten Authentisierungsinformation (AI), insbesondere mittels In-Band-Kommunikation, und zum Senden der Authentisierungsinformation (AI) zusammen mit einer Identifikationsnummer der drahtlosen Kommunikationseinrichtung (2) an eine Basiseinrichtung (4) zur Registrierung der drahtlosen Kommunikationseinrichtung (2),
(c) wobei die Basiseinrichtung (4) die drahtlose Kommunikationseinrichtung (2) in ein Netzwerk (5) in Abhängigkeit eines Ergebnisses einer Überprüfung der Authentisierungsinformation (AI) einbindet,
wobei die Authentisierungsinformation (AI) als Broadcast oder als Unicast übertragen werden, und dabei weitere Knoten-bezogene Messungen von Übertragungseigenschaften erfolgen, um eine Signalstärke mit einem vorgegebenen Wert zu vergleichen und/oder eine Entfernungsmessung zwischen der drahtlosen Authentisierungseinrichtung (1) und der drahtlosen Kommunikationseinrichtung (2) zu überprüfen.

8. System gemäß Anspruch 7, wobei
wobei die drahtlose Authentisierungseinrichtung (1) Beobachtungsmittel (1a) zum Beobachten einer Funkumgebung und/oder einer Lokalisierung der drahtlosen Authentisierungseinrichtung (1) aufweist.

9. System gemäß einem der Ansprüche 7 oder 8, wobei die drahtlose Authentisierungseinrichtung (1) Mittel zum Anpassen einer Sendeleistung aufweist.

10. Verwendung eines Systems gemäß einem der Ansprüche 7 bis 9 zum Registrieren einer drahtlosen Kommunikationseinrichtung (2).

## Claims

1. Method for registering a wireless communication device (2) at a base device (4), comprising the steps:
(a) transmission of authentication information (AI) by a wireless authentication device (1),
(b) receipt of the sent authentication information (AI) by the wireless communication device (2), in particular by means of in-band communication,
(c) transfer of the received authentication information (AI) together with an identification number of the wireless communication device (2) by the wireless communication device (2) to the base device (4),
(d) analysis of the transmitted authentication information (AI) by the base device (4), and
(e) inclusion of the wireless communication device (2) in a network (5) as a function of the result of the analysis,
wherein the authentication information (AI) is transmitted as a broadcast or as a unicast, and in this situation further node-related measurements of transfer properties take place, in order to compare a signal strength with a predefined value and/or to analyse a distance measurement between the wireless authentication device (1) and the wireless communication device (2).

2. Method according to claim 1, wherein the transmission of authentication information (AI) takes place using a reduced transmitting power and/or directionally, which means that the authentication information (AI) can be received only in spatially restricted fashion.

3. Method according to one of claims 1 and 2, wherein prior to transmission of the authentication information (AI) monitoring and/or evaluation of signals takes place, in particular communication signals, from the wireless communication device (2) and/or from further wireless communication devices (3a, 3b, 3c, 3d) located within wireless range of the authentication device (1).

4. Method according to claim 3, wherein the monitored and/or evaluated signals of the wireless communication device (2) are coded into the authentication information (AI), wherein in particular the coded monitored communication is evaluated by the base device (4).

5. Method according to one of claims 1 to 4, wherein prior to transmission of the authentication information (AI) an analysis is performed of at least one parameter of a wireless environment.

6. Method according to one of claims 1 to 5, wherein prior to transmission of the authentication information (AI) a localisation of the wireless authentication device (1) takes place.

7. System for registering a wireless communication device (2), in particular suitable for executing a method according to one of claims 1 to 6, having:
(a) a wireless authentication device (1) for transmitting authentication information (AI) to the wireless communication device (2),
(b) a wireless communication device (2) for receiving the transmitted authentication information (AI), in particular by means of in-band communication, and for sending the authentication information (AI) together with an identification number of the wireless communication device (2) to a base device (4) in order to register the wireless communication device (2),
(c) wherein the base device (4) includes the wireless communication device (2) in a network (5) as a function of a result of an analysis of the authentication information (2),
wherein the authentication information (AI) is transmitted as a broadcast or as a unicast, and in this situation further node-related measurements of transfer properties take place, in order to compare a signal strength with a predefined value and/or to analyse a distance measurement between the wireless authentication device (1) and the wireless communication device (2).

8. System according to claim 7, wherein the wireless authentication device (1) has observation means (1a) for observing a wireless environment and/or a localisation of the wireless authentication device (1).

9. System according to one of claims 7 or 8, wherein the wireless authentication device (1) has means for adjusting a transmitting power.

10. Use of a system according to one of claims 7 to 9 for registering a wireless communication device (2).

## Revendications

1. Procédé pour enregistrer un dispositif de communication sans fil (2) sur un dispositif de base (4), comportant les étapes suivantes :
(a) émission d'une information d'authentification (AI) par un dispositif d'authentification sans fil (1) ;
(b) réception de l'information d'authentification émise (AI) par le dispositif de communication sans fil (2), en particulier au moyen d'une communication en bande ;
(c) transmission de l'information d'authentification reçue (AI) avec un numéro d'identification du dispositif de communication sans fil (2) par le dispositif de communication sans fil (2) au dispositif de base (4) ;
(d) vérification de l'information d'authentification transmise (AI) par le dispositif de base (4) et
(e) intégration du dispositif de communication sans fil (2) dans un réseau (5) en fonction de la vérification,
l'information d'authentification (AI) étant transmise en multidiffusion ou en monodiffusion et d'autres mesures de caractéristiques de transmission en rapport avec des noeuds ayant lieu dans ce cadre pour comparer une intensité de signal avec une valeur donnée et/ou pour vérifier une mesure de distance entre le dispositif d'authentification sans fil (1) et le dispositif de communication sans fil (2) .

2. Procédé selon la revendication 1, l'émission d'une information d'authentification (AI) ayant lieu au moyen d'une puissance d'émission réduite et/ou de manière dirigée, de sorte que l'information d'authentification (AI) ne peut être reçue que de manière limitée dans l'espace.

3. Procédé selon l'une des revendications 1 et 2, avant l'émission de l'information d'authentification (AI) ayant lieu une surveillance et/ou évaluation de signaux, et plus particulièrement de signaux de communication du dispositif de communication sans fil (2) et/ou d'autres dispositifs de communication sans fil (3a, 3b, 3c, 3d) qui se trouvent dans la couverture radio du dispositif d'authentification (1) .

4. Procédé selon la revendication 3, les signaux surveillés et/ou évalués du dispositif de communication sans fil (2) étant codés en l'information d'authentification (AI), et plus particulièrement, la communication surveillée codée étant évaluée par le dispositif de base (4).

5. Procédé selon l'une des revendications 1 à 4, avant l'émission de l'information d'authentification (AI) ayant lieu une vérification d'au moins un paramètre d'un environnement radio.

6. Procédé selon l'une des revendications 1 à 5, avant l'émission de l'information d'authentification (AI) ayant lieu une localisation du dispositif d'authentification sans fil (1).

7. Système d'enregistrement d'un dispositif de communication sans fil (2), adapté plus particulièrement pour exécuter un procédé selon l'une des revendications 1 à 6, comportant :
(a) un dispositif d'authentification sans fil (1) qui est conçu pour envoyer une information d'authentification (AI) au dispositif de communication sans fil (2) ;
(b) un dispositif de communication sans fil (2) pour recevoir l'information d'authentification émise (AI), en particulier au moyen d'une communication en bande, et pour envoyer l'information d'authentification (AI) avec un numéro d'identification du dispositif de communication sans fil (2) à un dispositif de base (4) pour l'enregistrement du dispositif de communication sans fil (2),
(c) le dispositif de base (4) intégrant le dispositif de communication sans fil (2) dans un réseau (5) en fonction d'un résultat d'une vérification de l'information d'authentification (AI), l'information d'authentification (AI) étant transmise en multidiffusion ou en monodiffusion, et d'autres mesures de caractéristiques de transmission en rapport avec des noeuds ayant lieu dans ce cadre pour comparer une intensité de signal avec une valeur donnée et/ou pour vérifier une mesure de distance entre le dispositif d'authentification sans fil (1) et le dispositif de communication sans fil (2).

8. Système selon la revendication 7, le dispositif d'authentification sans fil (1) présentant des moyens d'observation (la) pour observer un environnement radio et/ou une localisation du dispositif d'authentification sans fil (1).

9. Système selon l'une des revendications 7 ou 8, le dispositif d'authentification sans fil (1) présentant des moyens d'adaptation d'une puissance d'émission.

10. Utilisation d'un système selon l'une des revendications 7 à 9 pour enregistrer un dispositif de communication sans fil (2) .
